Europäisches Patentamt

European Patent Office

Office européen des brevets

(11) Publication number: **0 211 051**
**B1**

(12) EUROPEAN PATENT SPECIFICATION

(45) Date of publication of patent specification: 22.11.90

(51) Int. Cl.⁵: **F 16 J 15/16,** F 04 D 29/10, F 04 D 29/12

(21) Application number: 86901017.3

(22) Date of filing: 31.01.86

(86) International application number:
PCT/AU86/00023

(87) International publication number:
WO 86/04655 14.08.86 Gazette 86/18

(54) MECHANICAL SEAL.

(30) Priority: 01.02.85 AU 9110/85

(43) Date of publication of application:
25.02.87 Bulletin 87/09

(45) Publication of the grant of the patent:
22.11.90 Bulletin 90/47

(84) Designated Contracting States:
AT BE CH DE FR GB IT LI LU NL SE

(56) References cited:
AU-B-1 263 947
AU-B-2 297 167
DE-A-2 345 322
GB-A- 992 877
US-A-2 576 673
US-A-3 370 856
US-A-4 253 713
US-A-4 418 919

(73) Proprietor: J.C. LUDOWICI & SON LIMITED
12 Victoria Avenue
Castle Hill New South Wales (AU)

(72) Inventor: McONIE, Robert William
90 Kitchener Road
Alfred Cove, W.A. 6154 (AU)
Inventor: MYLES, Matthew
90 Kitchener Road
Alfred Cove, W.A. 6154 (AU)

(74) Representative: Matthews, Graham Farrah et al
BROOKES & MARTIN Incorporating
MATTHEWS, HADDAN & CO. High Holborn
House 52/54, High Holborn
London, WC1V 6SE (GB)

Courier Press, Leamington Spa, England.

**Description**

This invention relates to a mechanical seal to provide a fluid seal between a stationary member and a rotary member passing through the stationary member.

The invention is particularly applicable to rotary machines (such as liquid pumps) for providing a liquid seal between a stationary part of the machine and a drive shaft passing through the stationary part.

In rotary machines provided with a rotatable drive shaft, a sealing arrangement is required between the drive shaft and a stationary part of the machine. Mechanical seals are frequently used for this purpose.

Known mechanical seals (e.g. DE—A—2345322) comprise a rotary sealing ring in sealing contact with a stationary sealing ring, both of which are concentric with. the drive shaft. The stationary ring is rigidly supported in a stationary part of the mechanical seal which is in turn fixed relative to the stationary part of the machine. The rotary sealing ring is rigidly supported in a rotary part of the mechanical seal which is rotatable with the shaft and held against radial movement with respect to the shaft while having provision for axial movement of limited amplitude. The rotary part of the mechanical seal is biassed towards the stationary sealing ring whereby to provide an effective sealing action between the rotary and stationary sealing rings while accommodating limited relative movement between the mechanical seal and the drive shaft in the axial direction of the drive shaft; this provides the mechanical seal with the ability to compensate for end play in the shaft.

However, the known mechanical seal suffers from a deficiency in that the rotary sealing ring is rigidly supported in the rotary part of the mechanical seal and this provides a constraint on the rotary sealing ring which severely limits the ability of the known mechanical seal to effectively compensate for thermal expansion and some misalignment between the shaft and the stationary part of the rotary machine.

It is an object of this invention to provide a mechanical seal having a rotary sealing ring which is supported elastically in the mechanical seal.

In one form the invention resides in a mechanical seal for providing a fluid seal between a stationary member and a rotary member passing therethrough, said mechanical seal comprising: a rotary portion adapted to be mounted on the rotary member for rotation therewith and a stationary portion adapted to be mounted on the stationary member; the stationary portion including a stationary sealing ring having a sealing face; the rotary portion including a housing having a circular recess therein concentric with the axis of rotation of the rotary member; a rotary sealing ring located in the circular recess and being supported elastically therein and fixed against rotation relative to the housing; the rotary sealing ring having a sealing face; wherein the sealing faces of the rotary and stationary rings are in sealing contact.

To effect fixing of the rotary sealing ring to the housing the rotary sealing ring may be bonded or otherwise secured in the mount of elastomeric material. For preference, the positive engaging means comprises at least one radial protrusion on the mount, the protrusion being located in complementary recess in the housing, which recess constitutes the second engaging means.

Preferably the mount has at least one circumferential rib on its outer side wall to facilitate insertion of the mount (with the rotary sealing ring therein) into the circular recess without distortion of the mount.

The biasing means may preferably include a frusto-conical spring the inner end of which acts on the sleeve and the outer of which acts on the housing.

In another form the invention resides in a combination of a rotary sealing ring and an elastic mount for use in a mechanical seal, characterised in that said rotary sealing ring is bonded to said elastic mount and has a sealing face spaced from said elastic mount, and further characterised in that said elastic mount is of substantially annular configuration, said elastic mount including means for positively engaging said rotary housing of said mechanical seal for fixing said elastic mount against rotation relative thereto, and said elastic mount further including an inwardly directed integral wiper flange adapted for sealing engagement with said sleeve of said mechanical seal.

For preference, the positive engaging means comprises at least one radial protrusion on the mount, the radial protrusion being adapted for location in a complementary recess in the rotary portion, which recess constitutes the second engaging means.

Preferably, the elastic mount has at least one circumferential rib on its outer side wall.

The invention will be better understood by reference to the following description of two specific embodiments thereof as shown in the accompanying drawings in which:—

Fig. 1 is a sectional elevational view of a mechanical seal according to the first embodiment in position in a liquid pump;

Fig. 2 is a sectional view of the mechanical seal of Fig. 1;

Fig. 3 is a fragmentary sectional elevational view of a mechanical seal of Fig. 1;

Fig. 4 is a perspective view of one side of a rotary sealing ring and elastic mount therefore, of the rotary portion of the mechanical seal shown in Fig. 1; and

Fig. 5 is a sectional view of a mechanical seal according to the second embodiment in position in a liquid pump.

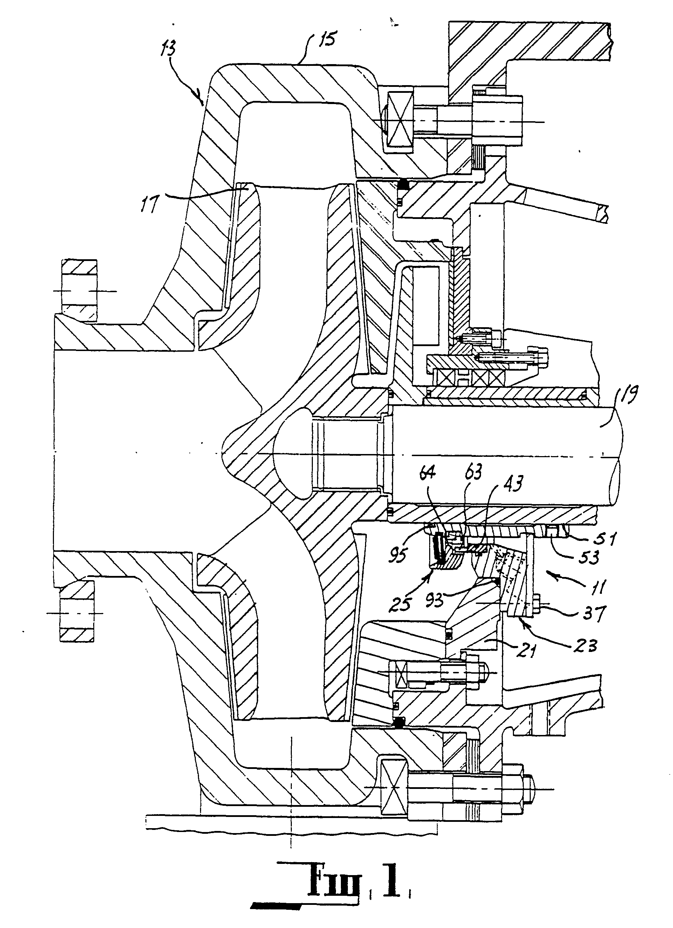

The first embodiment, which is shown in Figs. 1 to 4 of the accompanying drawings, is directed to a mechanical seal 11 for a liquid pump 13. The liquid pump 13 includes a pump housing 15, a rotor 17 for rotation in the pump housing and a drive shaft 19 for rotating the rotor. The housing 15 includes an adaptor plate 21. The mechanical seal 11 is adapted to be fitted onto the pump between the adaptor plate 21 and the drive shaft 19, as shown in Fig. 1 of the drawings.

The mechanical seal 11 includes a stationary portion 23 which is adapted to be secured to the adaptor plate 21, and a rotary portion 25 which is adapted to be secured to the drive shaft 19.

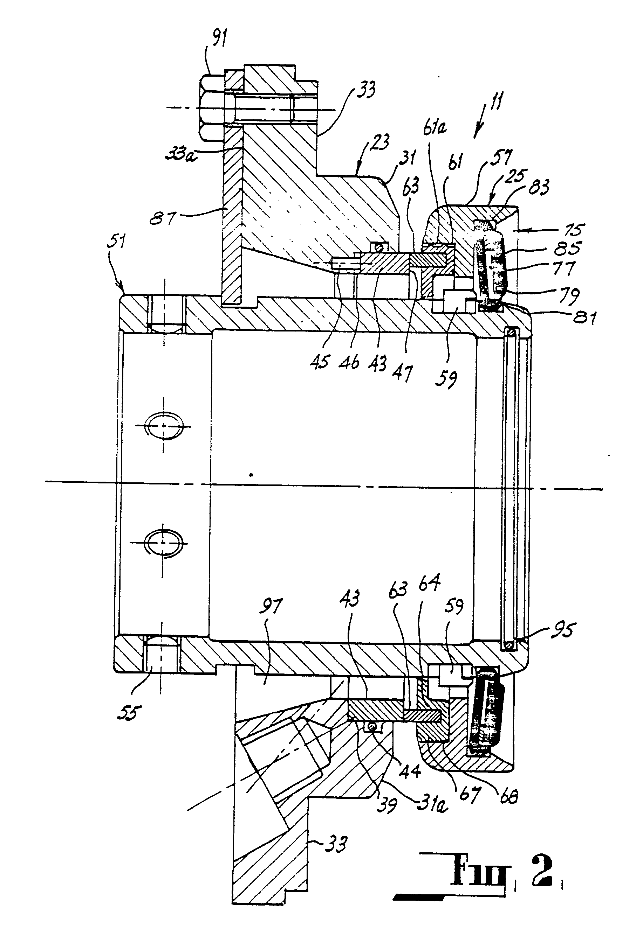

Referring particularly to Fig. 2 of the drawings which shows the mechanical seal in detail, the stationary portion 23 includes a fixed support 31 which is formed with a mounting flange 33. The mounting flange 33 has a plurality of mounting apertures (not shown) therein to receive mounting bolts 37 for mounting the fixed support 31 onto the adaptor plate 21 of the pump housing, as shown in Fig. 1 of the drawings. Formed in the fixed support 31 is a circular recess 39 which receives a stationary sealing ring 43. The stationary sealing ring 43 is supported radially by an O-ring mount 44. A dowel pin 45 is embedded at one end into the fixed support 31. The other end of the dowel pin 45 locates in a notch 46 formed in the sealing ring 43 thereby to fix the sealing ring against rotation relative to the fixed support 31. The sealing ring 43 extends beyond the fixed support 31 and the face 47 thereof defines a sealing face.

The rotary portion 25 includes a sleeve 51 adapted to be mounted on the shaft 19 of the pump and sscured thereto by means of locking screws 53 operating in radial apertures 55 adjacent one end of the sleeve. A housing 57 is located about the sleeve 51 adjacent the other end thereof. The housing 57 is connected to the sleeve 51 so as to undergo rotation with the sleeve and be capable of limited axial movement relative to the sleeve. This connection between the housing and the sleeve is effected by a pair of diametrally opposed drive keys 59 fitted between the housing and the sleeve.

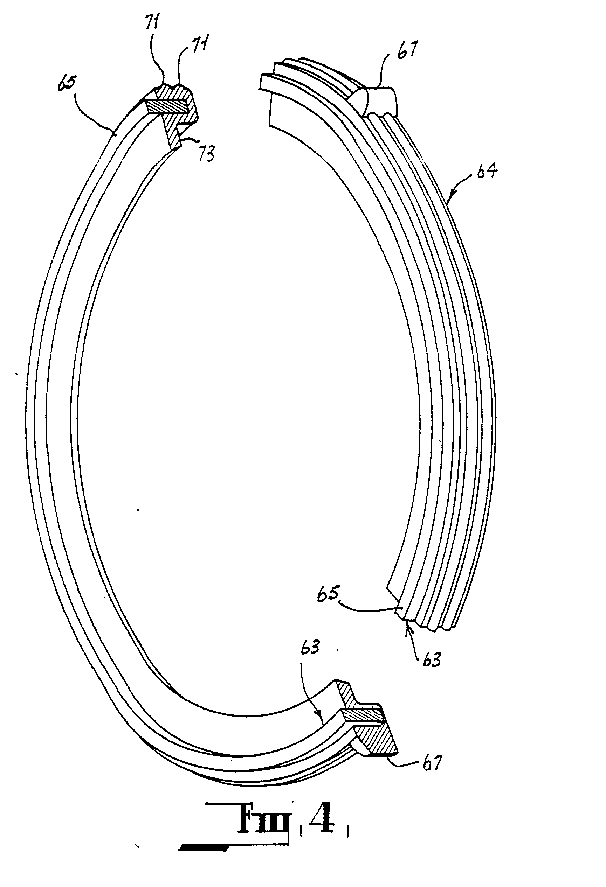

The housing 57 includes a circular recess 61 which faces the circular recess 39 formed in the fixed support 31. A rotary sealing ring 63 is located and elastically supported, in the circular recess 61. More particularly, the rotary sealing ring is mounted on a generally annular mount 64 which is received in the recess 61, as best seen in Fig. 2. The mount 64 is formed of elastomeric material and is vulcanised onto the sealing ring 63. One side of the sealing ring 63 is embedded in the mount 62 (as best seen in Fig. 4) and the other side is exposed to define a sealing face 65 which sealingly abuts the sealing face 47 of the stationary ring 43 and is in sliding and sealing contact therewith.

The mount 64 has a first engaging means for engaging a complementary second engaging means in the housing 57 whereby to fix the mount against rotation relative to the housing. The first engaging means is in the form of a plurality of radial protrusions 67 provided on the outer circumferential face of the mount as best seen in Fig. 4. The protrusions 67 formed on the mount locate in corresponding recesses 68 formed in the circular face 61a of the circular recess 61. The recesses 68 constitute said second engaging means. This arrangement provides positive engagement between the elastomeric mount and the housing 57 and thereby effects positive engagement between the housing 57 and the rotary sealing ring 63. This provides for effective transmission of rotational torque from the housing 57 to the rotary sealing ring.

In addition to the mechanical connection between the housing 57 and the mount 64 by way of the protrusions 68, there is a friction grip between the mount and the housing when the mount is in position in the circular recess 61. As is shown in Fig. 4, a pair of spaced circumferential ribs 71 are provided on the exterior side wall of the elastomeric mount 64. The ribs 71 serve to facilitate insertion of the elastomeric mount in the circular recess 61 of the housing 57 without undue distortion of the cup. The ribs achieve this because they effectively reduce the area of surface contact between the exterior side wall of the elastomeric mount and the circular face 61a of the recess 61 and so reduce the likelihood of distortion of the mount during its insertion.

The mount is also provided with a wiper portion 73 which contacts the sleeve 51 mounted on the drive shaft 19 for sealing purpose between the mount and the sleeve.

The rotary and stationary sealing rings are formed of abrasion resistant material typically tungsten carbide or silicon carbide.

When the mechanical seal is installed on the pump 13, the abutting faces of the rotary and stationary sealing rings are in compressive contact. This is achieved by biasing the housing 57 axially with respect to the sleeve 51 so as to urge the rotary sealing ring 63 towards the stationary sealing ring 43. The required axial movement of the housing with respect to the sleeve is permitted by the drive keys 59 which provide the connection therebetween. The axial biasing of the housing 57 with respect to the sleeve 51 is effected by a biassing means 75 operating between the housing and the sleeve. The biassing means 75 is in the form of a frusto-conical spring 77 having a coating 79 of the elastomeric material such as Neoprene or Viton. The coated spring 77 acts between the sleeve 51 and the housing 57, the inner end of the spring being received in an outwardly facing recess 81 formed circumferentially around the sleeve and the outer end of the spring being received in an inwardly facing recess 83 formed circumferentially within the housing. The face 85 of the coating for the spring is exposed to the product being pumped by the pump and is thickened for wear resistance, as shown in Fig. 2.

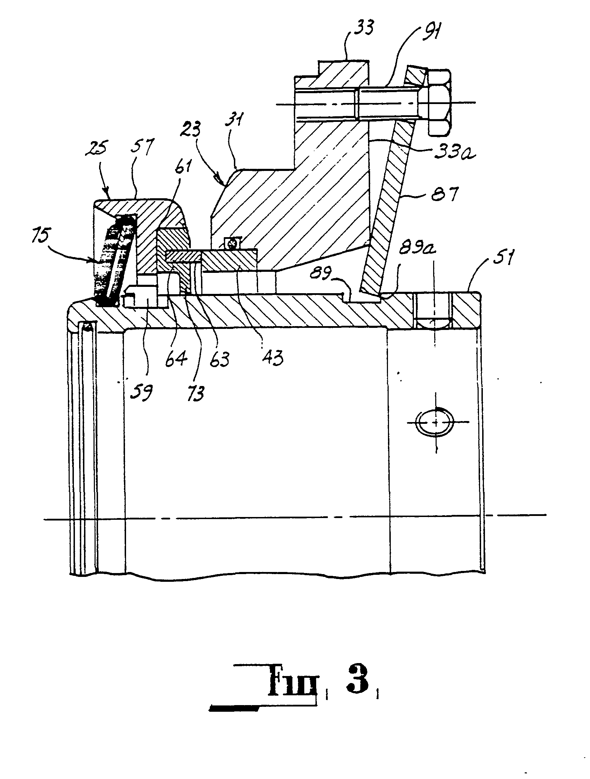

When fitting the mechanical seal to the pump, it is necessary to provide a predetermined pre-load between the abutting faces of the rotary and stationary sealing rings. A plurality of circumferentially spaced removable setting plate 87 are provided to facilitate this. A circumferential groove 89 is formed on the exterior of the sleeve 51 and each setting plate is adapted to be located in that groove and to be also detachably connected to the flange 33 of the fixed support 31 by means of a bolt 91. When each setting plate is in position, one of its faces bears against the face 33a of the flange 33 and its other face bears against the face 89a of the circumferential recess. When there is no pre-load between the stationary and fixed sealing rings, the recess 89 in the sleeve is offset in relation to the flange 33, whereby prior to tightening of the bolts 91 of the setting plates are angularly disposed with respect to the face 33a of the flange, as shown in Fig. 3. As the bolts 91 are tightened, the setting plates 87 are caused to undergo angular movement until such time as they are in abutting engagement with the face 33a of the flange. As the setting plates undergo the angular movement, the sleeve 51 is caused to move axially relative to the flange. This has the effect of applying the pre-load between the rotary and sealing rings. The setting plates are removed after the flange 33 has been secured to the adaptor plate 21 of the pump housing and the sleeve 51 has been secured to the drive shaft 19 of the pump.

A seal 93 in the form of an O-ring is provided between the fixed support 31 of the stationary portion and the adaptor plate 21 of the pump. In addition, a seal 95 also in the form of an O-ring is provided between the sleeve 51 of the rotary portion and the shaft 19 of the pump.

The mechanical seal is particularly applicable to pumps which deliver abrasive mediums such as liquids having solid particles in suspension; the pump illustrated in Fig. 1 is of such type. The rotary and stationary sealing rings are exposed to the liquid being pumped so as to be lubricated by that liquid. The face 31a of the fixed support 31 is inclined so as to allow an uninterrupted flow of the liquid to the sealing rings for lubrication purposes.

The stationary portion 23 of the mechanical seal is spaced from the sleeve 51 whereby a cavity 97 is defined therebetween. The cavity provides access to the rotary and stationary sealing rings for pressurised water to flush away any scale or other deposits that may form on the atmospheric side of the seal face.

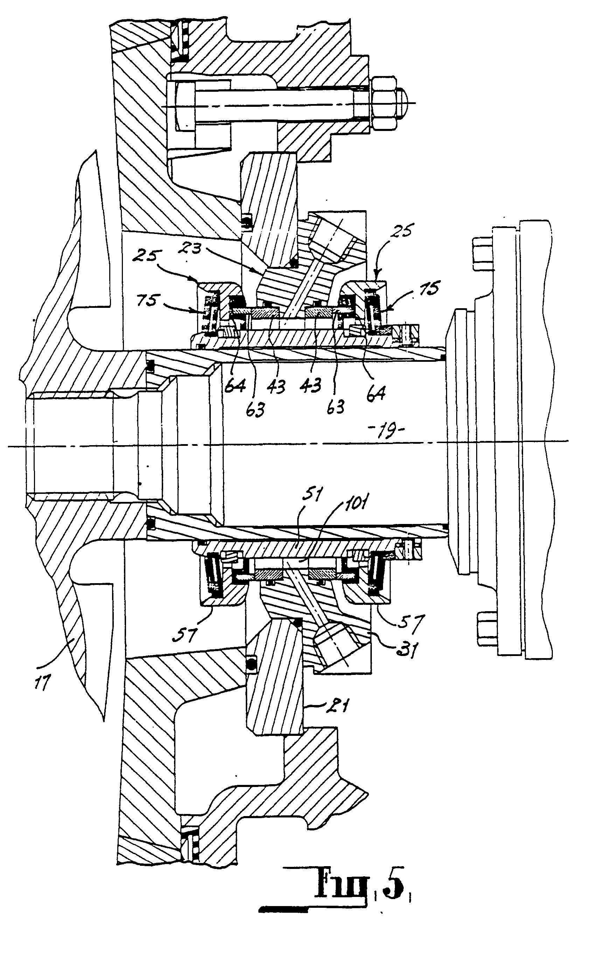

Referring now to Fig. 5 of the drawings, the mechanical seal according to the second embodiment is similar to that of the first embodiment (with the same reference numerals used to identify like parts), except that there are two seal faces each provided by abutting rotary and stationary sealing rings. The seal also includes provision for heat removal using a coolant which is delivered into the region 101 between the two seal faces.

It should be appreciated that the scope of the invention is not limited to the scope of the two embodiments described. The invention may, for example, have applications in rotary machines other than pumps.

## Claims

1. A mechanical seal (11) for providing a fluid seal between a stationary member and a rotary member passing therethrough, said mechanical seal comprising a stationary housing (31) adapted to be mounted on the stationary member, a stationary sealing ring (43) supported by said housing and having a sealing face; a sleeve (51) adapted to be mounted in sealing contact with the rotary member for rotation therewith, a rotary housing (57) slidably mounted on said sleeve for rotation therewith, said rotary housing having a circular recess (61) therein concentric with the axis of rotation of the rotary member, a rotary sealing ring (63) having a sealing face, and means (75) acting between said sleeve and said rotary housing for biasing said rotary housing axially towards said stationary housing for maintaining the sealing faces of said rotary and stationary rings in sealing contact as the rotary member rotates with respect to the stationary member, characterised in that there is provided a substantially annular elastic mount (64) located in said circular recess (61) elastically supporting said rotary sealing ring with the sealing faces of the rotary and stationary rings in sealing contact, said elastic mount (64) including means (67, 68) positively engaging said rotary housing for fixing said mount against rotation relatively to said rotary housing, and said elastic mount (64) further including an inwardly directed integral wiper flange (73) adapted for sealing engagement with said sleeve.

2. A mechanical seal according to claim 1, wherein said rotary sealing ring (63) is bonded to the elastomeric mount (64).

3. A mechanical seal according to claim 1 or 2, wherein said means positively engaging said rotary housing for fixing said elastic mount against rotation comprise a plurality of radial protrusions (67) extending radially outwardly of said elastic mount, and means defining recesses (68) in said housing for receiving said radial protrusions, engagement of said protrusions in said recesses providing effective positive transmission of rotational torque from said housing to said rotary sealing ring.

4. A mechanical seal according to any one of the preceding claims, wherein said elastic mount (64) includes at least one circumferential rib on its outer circumference for sealing engagement with said housing.

5. A mechanical seal according to any one of the preceding claims, wherein said biasing means comprises a frusto-conical spring (77) the inner end of which acts on said sleeve (51) and the outer of which acts on said rotary housing (57).

6. A combination of a rotary sealing ring (63) and an elastic mount (64) for use in a mechanical seal according to any one of the preceding claims, characterised in that said rotary sealing ring (63) is bonded to said elastic mount (64) and has a sealing face spaced from said elastic mount, and further characterised in that said elastic mount (64) is of substantially annular configuration, said elastic mount (64) including means (67, 68) for positively engaging said rotary housing (57) of said mechanical seal for fixing said elastic mount against rotation relative thereto, and said elastic mount (64) further including an inwardly directed integral wiper flange (73) adapted for sealing engagement with said sleeve (51) of said mechanical seal.

7. A combination according to claim 6, wherein said means for positively engaging said rotary housing comprises a plurality of radial protrusions (67) extending outwardly of said elastic mount (64).

8. A combination according to claim 6 or 7, wherein said elastic mount (64) includes at least one circumferential rib on its outer circumference for sealing engagement with said rotary housing.

**Patentansprüche**

1. Mechanische Dichtung (11) zum Bereitstellen einer Fluiddichtung zwischen einem stationären Teil und einem durch dasselbe gehenden drehbaren Teil, wobei die mechanische Dichtung ein stationäres Gehäuse (31), das derart ausgelegt, daß es an dem stationären Teil anbringbar ist, einen stationären Dichtring (43), der vom Gehäuse getragen wird und eine Dichtfläche hat, eine Hülse (51), die derart ausgelegt ist, daß sie in Dichtkontakt mit dem drehbaren Teil zur Drehung mit demselben anbringbar ist, ein drehbares Gehäuse (57), das gleitbeweglich auf der Hülse zur Drehung mit derselben angebracht ist, wobei das drehbare Gehäuse eine kreisförmige Ausnehmung (61) darin hat, die konzentrisch zu der Drehachse des drehbaren Teils vorgesehen ist, einen drehbaren Dichtungsring (63), der eine Dichtfläche hat, und eine Einrichtung (75) aufweist, die zwischen der Hülse und dem drehbaren Gehäuse zur Vorbelastung des drehbaren Gehäuses in axialer Richtung in Richtung auf das stationäre Gehäuse zur Aufrechterhaltung der Dichtflächen des drehbaren und des stationären Dichtrings in Dichtkontakt wirkt, wenn das drehbare Teil sich bezüglich des stationären Teils dreht, dadurch gekennzeichnet, daß eine im wesentlichen kreisförmige, elastische Trageinrichtung (64) in der kreisförmigen Ausnehmung (61) vorgesehen ist, welche elastisch den drehbaren Dichtring derart trägt, daß die Dichtflächen des drehbaren und des stationären Rings in Dichtkontakt sind, daß die elastische Trageinrichtung (64) eine Einrichtung (67, 68) enthält, die zwangsweise in Eingriff mit dem drehbaren Gehäuse bringbar ist, um die Trageinrichtung entgegen einer Drehung relativ zu dem drehbaren Gehäuse zu fixieren, und daß die elastische Trageinrichtung (64) ferner einen nach innen weisenden, einteiligen Abstreifflansch (79) enthält, der derart beschaffen ist, daß er in Dichteingriff mit der Hülse ist.

2. Mechanische Dichtung nach Anspruch 1, bei der drehbare Dichtring (63) haftend mit der elastomeren Trageinrichtung (64) verbunden ist.

3. Mechanische Dichtung nach Anspruch 1 oder 2, bei der die Einrichtung, welche zwangsläufig mit dem drehbaren Gehäuse zur Fixierung der elastischen Trageinrichtung gegenüber einer Drehung eine Mehrzahl von radialen Vorsprüngen (67) aufweist, die von der elastischen Trageinrichtung radial nach außen verlaufen, und eine Ausnehmungen (68) bildende Einrichtung in dem Gehäuse zur Aufnahme der radialen Vorsprünge aufweist, und bei der das Eingreifen der Vorsprünge in die Ausnehmungen eine effektive Zwangsübertragung des Drehmoments von dem Gehäuse auf den drehbaren Dichtring bewerkstelligt.

4. Mechanische Dichtung nach einem der vorangehenden Ansprüche, bei der die elastische Trageinrichtung (64) wenigstens eine Umfangsrippe an ihrem äußeren Umfang zum Dichteingriff mit dem Gehäuse enthält.

5. Mechanische Dichtung nach einem der vorangehenden Ansprüche, bei der die Vorbelastungseinrichtung eine kegelstumpfförmige Feder (77) aufweist, deren inneres Ende die Hülse (51) beaufschlagt und deren äußeres Ende das drehbare Gehäuse (57) beaufschlagt.

6. Kombination aus einem drehbaren Dichtring (63) und einer elastischen Trageinrichtung (64) zur Anwendung bei einer mechanischen Dichtung nach einem der vorangehenden Ansprüche, dadurch gekennzeichnet, daß der drehbare Dichtring (63) haftend mit der elastischen Trageinrichtung (64) verbunden ist und eine Dichtfläche hat, die einen Abstand von der elastischen Trageinrichtung hat, und die sich ferner dadurch auszeichnet, daß die elastische Trageinrichtung (64) eine im wesentlichen ringförmige Gestalt hat, die elastiche Trageinrichtung (64) eine Einrichtung (67, 68) enthält, welche zwangsläufig mit dem drehbaren Gehäuse (57) der mechanischen Dichtung zur Fixierung der elastischen Trageinrichtung gegenüber einer Drehbewegung relativ hierzu zusammenarbeitet, und daß die elastische Trageinrichtung (64) ferner einen nach innen weisenden integralen Abstreifflansch (73) enthält, der derart gewählt ist, daß er in Dichteingriff mit der Hülse (51) der mechanischen Dichtung bringbar ist.

7. Kombination nach Anspruch 6, bei der die Einrichtung, welche zwangsläufig mit dem drehbaren Gehäuse zusammenarbeitet, eine Mehrzahl von radialen Vorsprüngen (67) aufweist, die von der elastischen Trageinrichtung (64) nach außen verlaufen.

8. Kombination nach Anspruch 6 oder 7, bei der die elastische Trageinrichtung (64) wenigstens eine Umfangsrippe auf ihrem äußeren Umfang zum Dichtungseingriff mit dem drehbaren Gehäuse enthält.

**Revendications**

1. Un joint d'étanchéité mécanique (11) pour former un joint d'étanchéité aux fluides entre un élément fixé et un élément tournant traversant celui-ci, ledit joint mécanique d'étanchéité comportant une enveloppe fixe (31) agencée pour être montée sur l'élémennt fixe, une bague fixe d'étanchéité (43) supportée par ladite enveloppe et présentant une face d'étanchéité; un manchon (51) agencé pour être monté en contact d'étanchéité avec l'élément tournant pour tourner avec lui, une enveloppe tournante (57) montée à coulissement sur ledit manchon pour tourner avec celui-ci, ladite enveloppe fixe présentant une cavité intérieure circulaire (61) coaxiale à l'axe de rotation de l'élément tournant, une bague tournante d'étanchéité (63) présentant une face d'étanchéité, et des moyens (75) agissant entre ledit manchon et ladite enveloppe tournante pour rappeler ladite enveloppe tournante axialement vers ladite enveloppe fixe de manière à maintenir les faces d'étanchéité desdites bagues tournante et fixe en contact d'étanchéité lorsque l'élément tournant tourne par rapport à l'élément fixe, caractérisé en ce qu'il est prévu une monture élastique (64) sensiblement annulaire située dans ladite cavité circulaire (61) et supportant élastiquement ladite bague tournante d'étanchéité, les faces d'étanchéité des bagues tournante et fixe étant en contact d'étanchéité, ladite moture élastique (64) comportant des moyens (67, 68) coopérant positivement avec ladite enveloppe tournante pour empêcher ladite monture de tourner par rapport à ladite enveloppe tournante, et ladite monture élastique 64) comportant en outre, d'une seule pièce avec elle, une collerette de raclage (75) dirigée vers l'intérieur et agencée pour coopérer avec ledit manchon de manière étanche.

2. Un joint d'étanchéité mécanique selon la revendication 1, dans lequel ladite bague tournante d'étanchéité (63) est liée à la monture (64) en élastomère.

3. Un joint d'étanchéité mécanique selon la revendication 1 ou 2, dans lequel lesdits moyens coopérant positivement avec ladite enveloppe tournante pour empêcher ladite monture élastique de tourner comportent une pluralité de saillies radiales (67) s'étendant radialement vers l'extérieur de ladite monture élastique, et des moyens définissant des cavités (68) dans ladite enveloppe pour recevoir lesdites saillies radiales, l'engagement desdites saillies dans lesdites cavités fournissant une transmission positive efficace du couple de rotation de ladite enveloppe à ladite bague tournante d'étanchéité.

4. Un joint d'étanchéité mécanique selon l'une quelconque des revendications précédentes, dans lequel ladite monture élastique (64) comporte au moins une nervure circonférencielle sur sa périphérie extérieure pour coopérer avec ladite enveloppe de manière étanche.

5. Un joint d'étanchéité mécanique selon l'une quelconque des revendications précédentes, dans lequel lesdits moyens de rappel comportent un ressort tronconique (77) dont l'extrémité intérieure agit sur ledit manchon (51) et dont l'extrémité extérieure agit sur ladite enveloppe tournante (57).

6. Une combinaison d'une bague tournante d'étanchéité (63) et d'une monture élastique (64) à utiliser dans un joint d'étanchéité mécanique selon l'une quelconque des revendications précédentes, caractérisée en ce que ladite bague tournante d'étanchéité (63) est liée à ladite monture élastique (64) et présente une face d'étanchéité espacée de ladite monture élastique, et caractérisée en outre en ce que ladite monture élastique (64) est d'une configuration sensiblement annulaire, ladite monture élastique (64) comportant des moyens (67, 68) pour coopérer positivement avec ladite enveloppe tournante (67) dudit joint d'étanchéité mécanique pour empêcher ladite monture élastique de tourner par rapport à celle-ci, et ladite monture élastique (64) comportant en outre, d'une seule pièce avec elle, une collerette de raclage (73) dirigée vers l'intérieur et agencée pour coopérer de manière étanche avec ledit manchon (51) dudit joint d'étanchéité mécanique.

7. Une combinaison selon la revendication 6, dans laquelle lesdites moyens pour coopérer positivement avec ladite enveloppe tournante comportent une pluralité de saillies radiales (67) s'étendant vers l'extérieur de ladite monture élastique (64).

8. Une combinaison selon la revendication 6 ou 7, dans laquelle ladite monture élastique (64) comporte au moins une nervure circonférencielle sur sa périphérie extérieure pour coopérer de manière étanche avec ladite enveloppe tournante.

_Fig. 1_

Fig. 2

**Fig 3**

Fig. 4

Fig. 5